# EUROPEAN PATENT APPLICATION

(11) **EP 4 852 111 A1**
(43) Date of publication of application: **09.12.2026**
(21) Application number: 24921340.6
(22) Date of filing: 30.07.2024
(51) Int. Cl.: H01M 10/00, H01M 50/105, H01M 10/0525

(54) **SECONDARY BATTERY AND ELECTRICAL DEVICE**

(30) Priority: 01.02.2024 CN 202410140070
(71) Applicant: Ningde Amperex Technology Limited, Ningde, Fujian 352100 (CN)
(72) Inventor: MA, Wu, Ningde, Fujian 352100 (CN); ZHANG, Guowen, Ningde, Fujian 352100 (CN)
(74) Representative: Dehns Germany Partnerschaft mbB
(86) International application number: PCT/CN2024/108532
(87) International publication number: WO 2025/161308

(57) **Abstract**

This application discloses a secondary battery and an electrical device, which includes a packaging bag, an electrode assembly, and a first tab. The packaging bag includes a body portion, a first top sealing portion, and a first side sealing portion. The body portion includes a first top wall and a first side wall. The first top sealing portion is connected to the first top wall and bent toward a first direction. The first side wall is located on a side of the first top wall in a second direction. The first side sealing portion is connected to the first side wall. In the second direction, a first gap is formed between the first side sealing portion and the first top sealing portion. The first tab includes a first metal strip and a first tab adhesive surrounding the first metal strip. One end of the first metal strip is electrically connected to the electrode assembly. The first tab adhesive is adhered to the packaging bag. Another end of the first tab passes through the first tab adhesive and the first gap and extends out of the packaging bag. In this way, the secondary battery provided in this application is conducive to increasing the capacity of the secondary battery.

## Description

### TECHNICAL FIELD

This application relates to the field of battery technologies, and in particular, to a secondary battery and an electrical device.

### BACKGROUND

In the related art, the top of a pouch battery generally has no folded top sealing portion, which results in a large space occupied at the battery head. To improve the situation, a folded top sealing design may be considered. Specifically, a metal strip and tab adhesive of at least one tab are bent together with the bending of a top sealing portion. However, the tab adhesive has high hardness and is difficult to be bent. Even after the tab adhesive is bent, the tab adhesive occupies a large space in a height direction of a battery, which is not conducive to increasing the capacity of a secondary battery.

### SUMMARY

This application is intended to provide a secondary battery and an electrical device, so as to increase the capacity of the secondary battery.

According to a first aspect of this application, a secondary battery is provided, including a packaging bag, an electrode assembly, and a first tab. The packaging bag includes a body portion, a first top sealing portion, and a first side sealing portion. The electrode assembly is disposed in the body portion. The body portion includes a first top wall and a first side wall. The first top sealing portion is connected to the first top wall and bent toward a first direction. The first side wall is located on one side of the first top wall in a second direction. The first side sealing portion is connected to the first side wall. The first direction is perpendicular to the second direction. In the second direction, a first gap is formed between the first side sealing portion and the first top sealing portion. The first tab includes a first metal strip and a first tab adhesive surrounding the first metal strip. One end of the first metal strip is electrically connected to the electrode assembly. The first tab adhesive is adhered to the packaging bag. Another end of the first tab passes through the first tab adhesive and the first gap and extends out of the packaging bag.

In the secondary battery involved in this application, the first tab no longer extends out from the first top sealing portion, so that when folded, the first top sealing portion is not affected by the hardness of the first tab adhesive. As compared with the solution in which the first tab extends out from the first top sealing portion and both of them are bent together, a bending rebound force generated by the folding of the first top sealing portion is smaller, that is, a warpage degree of the first top sealing portion is reduced, and the space occupied by the first top sealing portion in a third direction after bending is reduced, which is conducive to increasing the battery capacity of the secondary battery.

In the one or more/optional embodiments, the body portion includes a second top wall. The second top wall is connected to the first top wall and the first side wall separately, and the second top wall is recessed toward a third direction relative to the first top wall. The third direction, the second direction, and the first direction are perpendicular to each other. The packaging bag includes a second top sealing portion. The second top sealing portion is disposed on the second top wall, and the second top sealing portion connects the first top sealing portion and the first side sealing portion. Another end of the first metal strip passes through the second top sealing portion and the first gap and extends out of the packaging bag.

In the one or more/optional embodiments, the second top wall includes a first connecting wall and a second connecting wall. The second connecting wall is connected to the first top wall through the first connecting wall. Both the second connecting wall and the first top wall are parallel to the first direction.

In the one or more/optional embodiments, the first tab adhesive is disposed on the second top sealing portion. In the third direction, an end of the first tab adhesive exceeds a side edge of the second top sealing portion. When viewed in the second direction, a projection of a portion of the first tab adhesive exceeding the side edge of the second top sealing portion overlaps with a projection of the first top sealing portion. The advantage of such arrangement is that in a distance by which the first tab adhesive exceeds the side edge of the packaging bag where the first tab adhesive is sealed, part of the head space is wasted due to the height limitation of the first tab adhesive. Disposing the first top sealing portion and the first tab adhesive to overlap in the third direction allows this part of the wasted space to be better utilized, so that part of the distance for increasing energy density is offset by the space size occupied by the first top sealing portion in the third direction, thereby further reducing the head space occupation of the secondary battery, and further increasing the capacity of the secondary battery.

In the one or more/optional embodiments, a distance between the second connecting wall in the third direction and a surface of the first top sealing portion facing away from the first top wall is S₁. In the third direction, a sum of a distance between an end closer to the second connecting wall and an end farther away from the second connecting wall of the second top sealing portion and a distance of the portion of the first tab adhesive exceeding the side edge of the second top sealing portion is S₂. S₁ and S₂ satisfy S₁ ≥ S₂. In this case, under the premise of little impact on the volumetric energy density of the secondary battery, the first tab adhesive does not need to be bent, thereby alleviating the occurrence of liquid leakage due to insufficient connection strength around the first tab adhesive caused by bending of the first tab adhesive.

In the one or more/optional embodiments, the packaging bag includes a second side sealing portion. The body portion includes a second side wall. The second side wall is located on another side of the first top wall in the second direction. The second side sealing portion is connected to the second side wall. In the first direction, a second gap is formed between the second side sealing portion and the first top sealing portion. The secondary battery includes a second tab. The second tab includes a second metal strip and a second tab adhesive surrounding and covering the second metal strip. One end of the first metal strip is electrically connected to the electrode assembly, and another end of the second tab passes through the second tab adhesive and the second gap and extends out of the packaging bag.

In the one or more/optional embodiments, the body portion includes a third top wall. The third top wall is connected to the first top wall and the second side wall separately, and the third top wall is recessed toward the third direction relative to the first top wall. The third direction, the second direction, and the first direction are perpendicular to each other. The packaging bag includes a third top sealing portion. The third top sealing portion is disposed on the third top wall, and the third top sealing portion connects the first top sealing portion and the second side sealing portion. Another end of the second metal strip passes through the third top sealing portion and the second gap and extends out of the packaging bag.

In the foregoing technical solution, the second tab no longer extends out from the second top sealing portion, so that when folded, the second top sealing portion is not affected by the hardness of the second tab adhesive. As compared with the solution in which the second tab extends out from the first top sealing portion and both of them are bent together, a bending rebound force generated by the folding of the first top sealing portion is smaller, that is, a warpage degree of the first top sealing portion is reduced, and the space occupied by the first top sealing portion in the third direction after bending is reduced, thereby reducing the head space occupation of the secondary battery, and further increasing the capacity of the secondary battery.

In the one or more/optional embodiments, the third top wall includes a third connecting wall and a fourth connecting wall. The fourth connecting wall is connected to the first top wall through the third connecting wall. Both the fourth connecting wall and the first top wall are parallel to the first direction.

In the one or more/optional embodiments, the second tab adhesive is disposed on the third top sealing portion. In the third direction, an end of the second tab adhesive exceeds a side edge of the third top sealing portion. When viewed in the second direction, a projection of a portion of the second tab adhesive exceeding the side edge of the third top sealing portion overlaps with a projection of the first top sealing portion. With such arrangement, in a distance by which the second tab adhesive exceeds the side edge of the packaging bag where the second tab adhesive is sealed, part of the distance is offset by the space size occupied by the first top sealing portion in the third direction, thereby further reducing the head space occupation of the secondary battery, and further increasing the capacity of the secondary battery.

In the one or more/optional embodiments, the packaging bag has a first chamber and a second chamber communicating with the first chamber.

The electrode assembly includes an electrode assembly body and a protrusion integrally connected to the electrode assembly body. The electrode assembly body is accommodated in the first chamber, and the protrusion is accommodated in the second chamber. One end of the first metal strip and one end of the second metal strip are both electrically connected to the electrode assembly body. The electrode assembly includes a first electrode plate, a second electrode plate, and a separator that separates the first electrode plate from the second electrode plate. The first electrode plate includes a first electrode plate body and a first protruding portion integrally connected to the first electrode plate body. The second electrode plate includes a second electrode plate body and a second protruding portion integrally connected to the second electrode plate body. The separator includes a separator body and a third protruding portion integrally connected to the separator body. The electrode assembly body is formed by alternately stacking the first electrode plate body, the separator body, and the second electrode plate body in sequence. The protrusion is formed by alternately stacking the first protruding portion, the third protruding portion, and the second protruding portion in sequence.

In the one or more/optional embodiments, in the third direction, a junction between the electrode assembly body and the first metal strip is opposite the second top wall. On one hand, a gap between the protrusion and the first top sealing portion is shortened, which can reduce the accumulation of free electrolyte in this partial region, thereby alleviating the occurrence of separator contraction and short circuit caused by the separator at the protrusion being impacted by excessive accumulation of free electrolyte. On the other hand, the first top sealing portion is no longer affected by the first metal strip and the first tab adhesive during heat sealing, and the first top sealing portion has stable connection strength after heat sealing. On still the other hand, a size of the first top sealing portion extending outward is also reduced because it is not affected by the first metal strip and the first tab adhesive, thereby further increasing the volumetric energy density of the secondary battery.

In the one or more/optional embodiments, in the third direction, a junction between the electrode assembly body and the second metal strip is opposite the third top wall. Based on a mechanism similar to that described in the junction of electrical connection between the first electrode plate body and the first tab, similar effects to those in the foregoing embodiments can also be achieved. Details are not repeated herein. In addition, when the first tab and the second tab are respectively located on opposite sides of the first top sealing portion in the second direction, even if the presence of a first space and a second space reduces the capacity of the secondary battery, as compared with a battery with top folded for sealing of the same size, the capacity increased by the protrusion is still greater than a sum of the capacity reduced by the above two, that is, the total capacity of the secondary battery can still be increased.

In the one or more/optional embodiments, at least two third protruding portions are provided. In the third direction, the at least two third protruding portions exceed an end of the second protruding portion and are connected and fixed to each other to form a connecting portion. With such arrangement, the overall structure formed by connecting and fixing a plurality of third protruding portions can increase an upper limit of the maximum impact stress resistance, thereby alleviating the occurrence of separator folding and short circuit when the separator at the protrusion is impacted by free electrolyte.

In the one or more/optional embodiments, a length of the connecting portion in the second direction is 15 mm to 120 mm.

In the one or more/optional embodiments, the second side sealing portion is bent toward the first direction.

In the one or more/optional embodiments, the first side sealing portion is bent toward the first direction.

According to a second aspect of this application, an electrical device is provided, including the foregoing secondary battery.

Additional aspects and advantages of some embodiments of this application are partly described and presented in subsequent descriptions, or explained by implementation of some embodiments of this application.

### BRIEF DESCRIPTION OF DRAWINGS

To describe the technical solutions in the specific embodiments of this application or in the prior art more clearly, the following briefly describes the accompanying drawings required for describing the specific embodiments or the prior art. In all the accompanying drawings, similar elements or parts are generally denoted by similar reference signs. In the drawings, the elements or parts are not necessarily drawn to scale.
FIG. 1 is a schematic structural diagram of a secondary battery according to a first embodiment of this application;
FIG. 2 is a schematic structural diagram of another secondary battery according to the first embodiment of this application;
FIG. 3 is a locally enlarged view at position a in FIG. 1;
FIG. 4 is a locally enlarged view at position b in FIG. 1;
FIG. 5 is a schematic structural diagram of an electrode assembly when not assembled in a packaging bag in the secondary battery shown in FIG. 1;
FIG. 6 is a locally enlarged view at position c in the secondary battery shown in FIG. 5;
FIG. 7 is a schematic structural diagram of the secondary battery shown in FIG. 1 from another angle;
FIG. 8 is a locally enlarged view at position d in FIG. 7;
FIG. 9 is a locally enlarged view at position e in FIG. 7;
FIG. 10 is a cross-sectional view along line A-A in FIG. 1;
FIG. 11 is a locally enlarged view at position f in FIG. 10;
FIG. 12 is a schematic structural diagram of a secondary battery according to a second embodiment of this application;
FIG. 13 is a schematic structural diagram of another secondary battery according to the second embodiment of this application;
FIG. 14 is another schematic structural diagram of the secondary battery shown according to the second embodiment of this application;
FIG. 15 is still another schematic structural diagram of the secondary battery shown according to the second embodiment of this application;
FIG. 16 is a local cross-sectional view at position g in FIG. 15;
FIG. 17 is a local cross-sectional view at position h in FIG. 15;
FIG. 18 is a cross-sectional view along line B-B in FIG. 15;
FIG. 19 is a locally enlarged view at position i in FIG. 18; and
FIG. 20 is an exploded view of a structure of the secondary battery shown in FIG. 12.

### DESCRIPTION OF EMBODIMENTS

To make the objectives, technical solutions, and advantages of some embodiments of this application clearer, the following clearly describes the technical solutions in some embodiments of this application with reference to the accompanying drawings in some embodiments of this application. Apparently, these embodiments described are some rather than all embodiments of this application.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mounting", "connection", and the like should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "perpendicular" is used to describe an ideal state between two components. In practical production or usage conditions, there may exist a state that approximates perpendicular between the two components. For example, in numerical terms, "perpendicular" may refer to an angle between two lines within the range of 90°±10°, and "perpendicular" may also refer to the dihedral angle between two planes within the range of 90°±10°. Additionally, "perpendicular" may denote the angle between a line and a plane within the range of 90°±10°. The two components described as "perpendicular" may not be absolute lines or planes; they may also be approximately linear or planar. From a macroscopic perspective, if the overall direction of extension is linear or planar, the components may be considered "linear" or "planar".

The term "parallel" is used to describe an ideal state between two components. In practical production or usage conditions, there may exist a state that approximates parallel between the two components. For example, in numerical terms, "parallel" may refer to an angle between two lines within the range of 180°±10°, and "parallel" may also refer to the dihedral angle between two planes within the range of 180°±10°. Additionally, "parallel" may denote the angle between a line and a plane within the range of 180°±10°.

The two components described as "parallel" may not be absolute lines or planes; they may also be approximately linear or planar. From a macroscopic perspective, if the overall direction of extension is linear or planar, the components may be considered "linear" or "planar". Due to tolerances in the process, deviations between two planes within 0.5 mm can be considered parallel.

The technical features involved in different embodiments of this application that are described below may be combined as long as they do not conflict with each other.

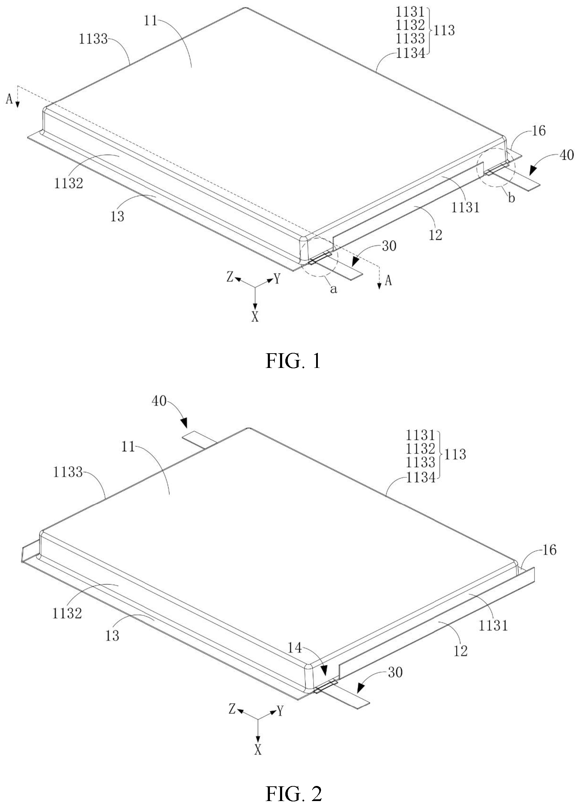

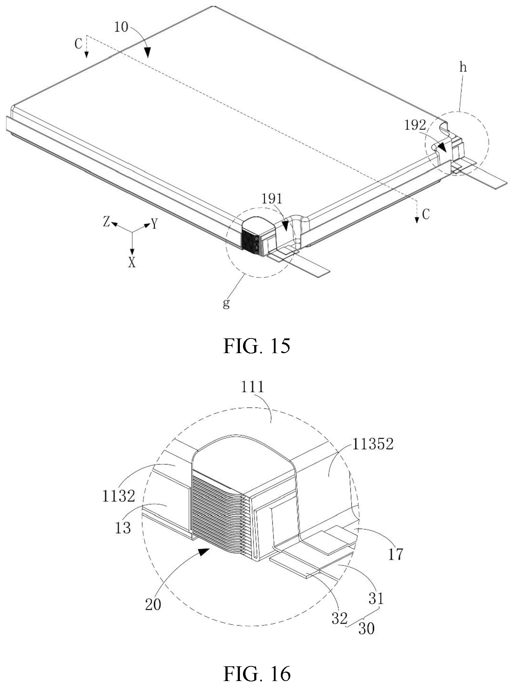

As shown in FIG. 1 to FIG. 20, for ease of description, a three-dimensional rectangular coordinate system is established with a thickness direction of a secondary battery as a first direction X, a width direction of the secondary battery as a second direction Y, and a length direction of the secondary battery as a third direction Z.

In some embodiments, the first direction X is parallel to a direction in which a first main wall 111 and a second main wall 112 of a packaging bag 10 described below are opposite each other; and in addition, the first direction X is also parallel to a direction in which electrode plates in an electrode assembly 20 described below are stacked.

In some embodiments, the second direction Y is parallel to a direction in which a first side wall 1132 and a second side wall 1134 of the packaging bag 10 described below are opposite each other; and in addition, the second direction Y is also parallel to a direction from a side of the first top sealing portion 12 closer to the first side sealing portion 13 to a side closer to the second side sealing portion 16 of the packaging bag 10 described below.

In some embodiments, the third direction Z is parallel to a direction in which a first top wall 1131 and a bottom wall 1133 of the packaging bag 10 described below are opposite each other; and in addition, the third direction Z is also parallel to an extending direction of a first tab 30 described below.

### First embodiment

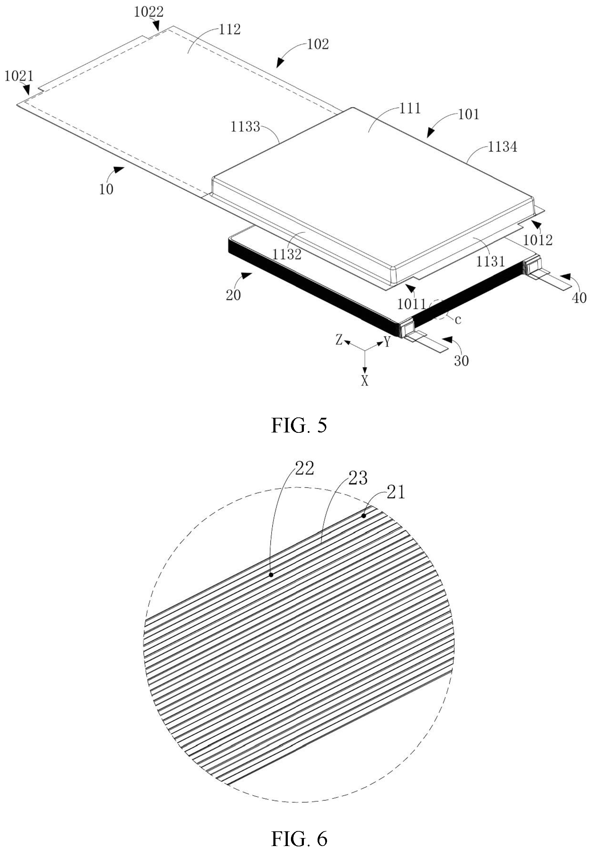

FIG. 1 is a schematic structural diagram of a secondary battery according to a first embodiment of this application. FIG. 5 is a schematic structural diagram of an electrode assembly when not assembled in a packaging bag in the secondary battery shown in FIG. 1.

Refer to FIG. 1 and FIG. 5 together. The secondary battery includes a packaging bag 10, an electrode assembly 20, a first tab 30, and a second tab 40. The packaging bag 10 is an accommodating base for the electrode assembly 20, which defines an accommodating chamber (not shown in the figure), and the electrode assembly 20 is accommodated in the accommodating chamber. Both the first tab 30 and the second tab 40 are located on the same side of the packaging bag 10. In the accommodating chamber, one end of the first tab 30 and one end of the second tab 40 are both electrically connected to the electrode assembly 20. Another end of the first tab 30 and another end of the second tab 40 both pass through the accommodating chamber and extend out of the packaging bag 10. The first tab 30 and the second tab 40 are configured to be electrically connected to an electrical device to realize charging and discharging of the secondary battery.

In some embodiments, the secondary battery includes an electrolyte, and the electrolyte is accommodated in the accommodating chamber and infiltrates the electrode assembly 20.

In some embodiments, the secondary battery is a pouch lithium-ion secondary battery.

The pouch secondary battery being a pouch lithium-ion secondary battery is used as an example for describing a structure of the secondary battery. It can be understood that the secondary battery may alternatively be other types of pouch secondary batteries than pouch lithium-ion secondary batteries. Examples of such pouch secondary batteries include pouch sodium-ion secondary batteries, solid-state pouch secondary batteries, or semi-solid-state pouch secondary batteries.

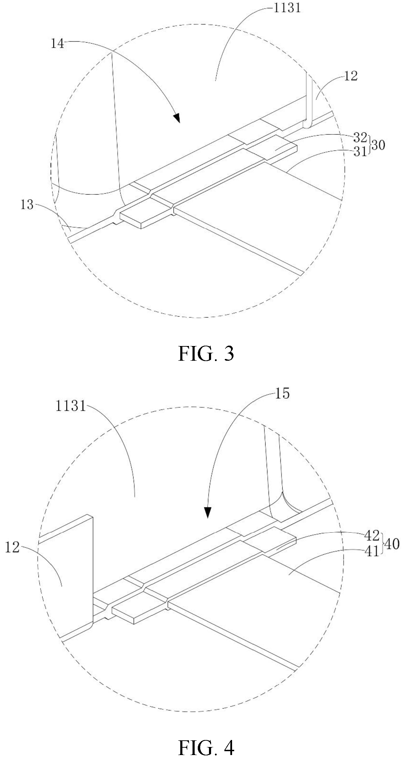

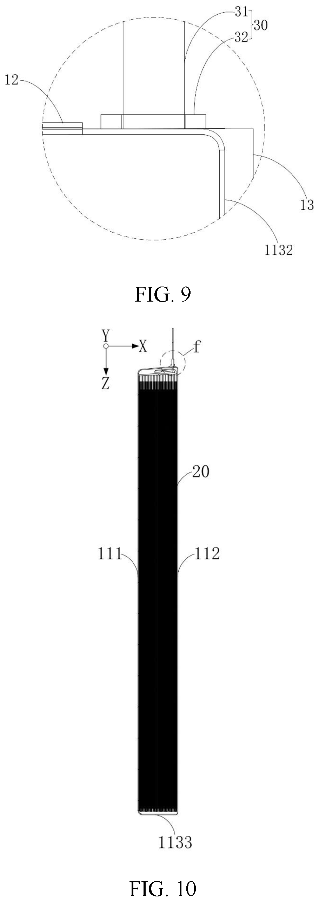

FIG. 2 is a schematic structural diagram of another secondary battery according to the first embodiment of this application. FIG. 3 is a locally enlarged view at position a in FIG. 1. FIG. 4 is a locally enlarged view at position b in FIG. 1. FIG. 10 is a cross-sectional view along line A-A in FIG. 1.

The following describes a structure of the packaging bag 10 with reference to FIG. 1 to FIG. 4, FIG. 5, and FIG. 8.

Refer to FIG. 1 and FIG. 10. In some embodiments, the packaging bag 10 is generally of a flat rectangular shape, which includes a body portion 11, a first top sealing portion 12, a first side sealing portion 13, and a second side sealing portion 16. The body portion 11 includes a first main wall 111, a second main wall 112, and a plurality of side walls 113. The plurality of side walls 113 include a first top wall 1131, a first side wall 1132, a second side wall 1134, and a bottom wall 1133. The first top wall 1131, the first side wall 1132, the bottom wall 1133, and the second side wall 1134 are connected end to end in sequence and are separately connected to a periphery of the first main wall 111 and a periphery of the second main wall 112 to jointly enclose the foregoing accommodating chamber. The first main wall 111 and the second main wall 112 are opposite each other, the first side wall 1132 and the second side wall 1134 are opposite each other, and the bottom wall 1133 and the first top wall 1131 are opposite each other. The first top sealing portion 12 is connected to the first top wall 1131 and bent toward the first direction X. The first side sealing portion 13 is connected to the first side wall 1132 and extends outward. The second side sealing portion 16 is connected to the second side wall 1134 and extends outward.

It can be understood that the shape of the packaging bag 10 is not limited to the foregoing rectangular shape and may be adaptively adjusted according to actual use requirements. For example, in some other embodiments, the packaging bag 10 may be L-shaped or of a regular polyhedral shape. In addition, the shape of the packaging bag 10 is related to a shape of the electrode assembly 20 described below, and may vary with the shape of the electrode assembly 20.

It can be seen from FIG. 3 that in some embodiments, in the second direction Y, a first gap 14 is formed between the first side sealing portion 13 and the first top sealing portion 12. Another end of the first tab 30 passes through the accommodating chamber and the first gap 14 and extends out of the packaging bag 10.

Specifically, in the second direction Y, the first gap 14 is formed between one side edge of the first side sealing portion 13 in the third direction Z and one side edge of the first top sealing portion 12 in the second direction Y.

The first tab 30 includes a first metal strip 31 and a first tab adhesive 32 surrounding and covering the first metal strip 31. The first tab adhesive 32 is disposed on the packaging bag 10, and in the third direction Z, a projection of the first tab adhesive 32 falls into the first gap 14. One end of the first metal strip 31 is electrically connected to the electrode assembly 20 in the accommodating chamber. In the third direction Z, another end of the first metal strip 31 passes through the first tab adhesive 32 and the first gap 14 and extends out of the packaging bag 10. A portion of the first metal strip 31 extending out of the packaging bag 10 may be electrically connected to an electrical device.

It should be noted that when the following condition is satisfied: when viewed in the first direction X, a projection of one side edge of the first top sealing portion 12 in the second direction Y is separated from a projection of one side edge of the first side sealing portion 13 in the third direction Z, it can be determined that a first gap 14 is formed between the first side sealing portion 13 and the first top sealing portion 12 in the second direction Y. Alternatively, when the following condition is satisfied: when viewed in the third direction Z, a projection of one side edge of the first top sealing portion 12 in the second direction Y is separated from a projection of one side edge of the first side sealing portion 13 in the third direction Z, it can also be determined that a first gap 14 is formed between the first side sealing portion 13 and the first top sealing portion 12 in the second direction Y.

In the secondary battery involved in this application, the first tab 30 no longer extends out from the first top sealing portion 12, so that when folded, the first top sealing portion 12 is not affected by the hardness of the first tab adhesive 32. As compared with the solution in which the first tab 30 extends out from the first top sealing portion 12 and both of them are bent together, a bending rebound force generated by the folding of the first top sealing portion 12 is smaller, that is, a warpage degree of the first top sealing portion 12 is reduced, and the space occupied by the first top sealing portion 12 in the third direction Z after bending is reduced, which is conducive to increasing the battery capacity of the secondary battery.

It can be seen from FIG. 4 that in some embodiments, in the second direction Y, a second gap 15 is formed between the second side sealing portion 16 and the first top sealing portion 12. Another end of the second tab 40 passes through the accommodating chamber and the second gap 15 and extends out of the packaging bag 10.

Specifically, in the second direction Y, a second gap 15 is formed between one side edge of the second side sealing portion 16 in the third direction Z and another side edge of the first top sealing portion 12 in the second direction Y.

The second tab 40 includes a second metal strip 41 and a second tab adhesive 42 surrounding and covering the second metal strip 41. The second tab adhesive 42 is disposed on the packaging bag 10. In the third direction Z, a projection of the second tab adhesive 42 falls into the second gap 15. One end of the second metal strip 41 is electrically connected to the electrode assembly 20 in the accommodating chamber. Another end of the second metal strip 41 passes through the second tab adhesive 42 and the second gap 15 and extends out of the packaging bag 10. A portion of the second metal strip 41 extending out of the packaging bag 10 may be electrically connected to an electrical device.

It should be noted that with a determining condition of the second gap 15 satisfied, it can be determined that a second gap 15 is formed between the second side sealing portion 16 and the first top sealing portion 12 in the second direction Y. The determining condition of the second gap 15 is similar to the determining condition of the first gap 14. For the detailed content, refer to the relevant description for the first gap 14. Details are not repeated herein.

In the foregoing technical solution, the second tab 40 no longer extends out from the second top sealing portion 17, so that when folded, the second top sealing portion 17 is not affected by the hardness of the second tab adhesive 42. As compared with the solution in which the second tab 40 extends out from the first top sealing portion 12 and both of them are bent together, a bending rebound force generated by the folding of the first top sealing portion 12 is smaller, that is, a warpage degree of the first top sealing portion 12 is reduced, and the space occupied by the first top sealing portion 12 in the third direction Z after bending is reduced, thereby reducing the head space occupation of the secondary battery, and further increasing the capacity of the secondary battery.

Certainly, the arrangement of the first tab 30 and the second tab 40 may be adaptively adjusted according to actual use requirements. For example, as shown in FIG. 2, in some other embodiments, the first tab 30 and the second tab 40 are respectively located on opposite sides of the packaging bag 10. The first tab 30 extends out from the first gap 14 located at the head of the secondary battery, and the second tab 40 extends out from the second gap 15 located at the tail of the secondary battery, so that the space occupation at both the head and tail of the secondary battery can be reduced, which is also conducive to increasing the capacity of the secondary battery.

For a specific structure of the packaging bag 10, it includes a first film 101 and a second film 102. The first film 101 and the second film 102 may be integrally provided or separately provided. For example, as shown in FIG. 5, the first film 101 and the second film 102 may be formed by folding a film material with a composite layer structure. The specific implementation is as follows.

Firstly, a first notch 1011 is punched at a first corner of the first film 101, and a second notch 1021 is punched on the second film 102 at a position corresponding to the first notch 1011 at the first corner; and a third notch 1012 is punched at a second corner of the first film 101, and a fourth notch 1022 is punched on the second film 102 at a position corresponding to the third notch 1012 at the second corner.

Secondly, at least one pit is formed on at least one of the first film 101 or the second film 102 after a pitting process.

Then, the film is folded at a middle part along a fold line to wrap around the electrode assembly 20.

Subsequently, each sealing edge except the part where the pit is located is sealed, the first corner is hot-pressed to make the first tab adhesive 32, the first film 101, and the second film 102 be melted and formed, and the second corner is hot-pressed to make the second tab adhesive 42, the first film 101, and the second film 102 be melted and formed.

Two sealing edges adjacent to the first notch 1011 are the foregoing first top sealing portion 12 and first side sealing portion 13, and a sealing edge opposite the first side sealing portion 13 in the second direction Y is the second side sealing portion 16.

The closed space formed by stamping and stretching at least one of the first film 101 and the second film 102 followed by sealing is the foregoing accommodating chamber.

The first top sealing portion 12 is bent toward the first direction X and is used to be partially attached to the first top wall 1131.

One side edge of the first top sealing portion 12 in the second direction Y and one side edge of the first side sealing portion 13 in the third direction Z define a boundary of the first gap 14.

Another side edge of the first top sealing portion 12 in the second direction Y and one side edge of the second side sealing portion 16 in the third direction Z define a boundary of the second gap 15.

In some embodiments, the composite layer structure includes a first polymer layer, a metal layer, and a second polymer layer. The first polymer layer, the metal layer, and the second polymer layer are sequentially stacked from the inside of the accommodating chamber to the outside of the accommodating chamber to form the foregoing first film 101 and/or second film 102.

The first polymer layer is melted at a preset temperature and has viscosity, so as to facilitate the sealing of the packaging bag 10. Materials for making such first polymer layer may include polyethylene, polypropylene, polycarbonate, polyamide, polyethylene terephthalate, acrylonitrile-butadiene-styrene copolymer, polyoxymethylene, polyphenylene ether, and the like, so that the first polymer layer is difficult to be dissolved or swollen by the electrolyte, thereby reducing the risk of corrosion of the metal layer adjacent to the first polymer layer.

The metal layer is used to reduce the risk of moisture penetrating into the accommodating chamber and to enhance the structural strength of the packaging bag 10. Materials for making such metal layer may include aluminum foil, duplex stainless steel foil, and the like, so that the metal layer can react with oxygen in the air to form a dense oxide film, thereby reducing the risk of moisture penetrating into the accommodating chamber.

The second polymer layer is used to reduce the risk of air penetrating into the accommodating chamber and to improve the deformability of the packaging bag 10. Materials for making such second polymer layer may include polyamide, polyethylene, polypropylene, polycarbonate, polyethylene terephthalate, acrylonitrile-butadiene-styrene copolymer, polyoxymethylene, polyphenylene ether, and the like.

It can be understood that the sealing method between the first film 101 and the second film 102 is not specifically limited in some embodiments of this application. For example, the first film 101 and the second film 102 may be fixedly connected by adhering or hot pressing, or may be laminated first and then heat-sealed, or other processes may be used to achieve the fixed connection between the first film 101 and the second film 102.

It can also be understood that the structure of the packaging bag 10 is actually diverse and is not limited to the foregoing specific structures of the packaging bag 10, provided that it can serve as the accommodating base for the electrode assembly 20 and have a deformation capacity similar to that of the foregoing packaging bag 10. In addition, the packaging bag 10 should be configured such that a first gap 14 is formed between one side edge of the first top sealing portion 12 in the second direction Y and one side edge of the bent first side sealing portion 13 in the third direction Z, and the first gap 14 can allow another end of the first tab 30 to extend out.

In some embodiments, the first side sealing portion 13 and/or the second side sealing portion 16 is bent toward the first direction X, the first side sealing portion 13 is used to be attached to the first side wall 1132, and the second side sealing portion 16 is used to be attached to the second side wall 1134. This can reduce the space occupied by the secondary battery inside an electrical device, and such space can be used to increase the size of the electrode assembly 20, thereby increasing the energy density of the secondary battery. In this case, the boundary of the first gap 14 can be jointly defined by one side edge of the bent first top sealing portion 12 in the second direction Y and one side edge of the bent first side sealing portion 13 in the third direction Z.

Refer to FIG. 10 together with FIG. 3 or FIG. 9. To alleviate the short circuit caused by the contact between the first metal strip 31 and an exposed metal layer on the packaging bag 10 that surrounds an outer peripheral surface thereof, in some embodiments, in the third direction Z, an end of the first tab adhesive 32 exceeds a side edge of the packaging bag 10 where the first tab adhesive 32 is sealed.

Further, when viewed in the second direction Y, a projection of the first tab adhesive 32 in the third direction Z exceeding the first top wall 1131 overlaps with a projection of the first top sealing portion 12. The advantage of such arrangement is that in a distance by which the first tab adhesive 32 exceeds the side edge of the packaging bag 10 where the first tab adhesive 32 is sealed, part of the head space is wasted due to the height limitation of the first tab adhesive 32. Disposing the first top sealing portion 12 and the first tab adhesive 32 to overlap in the third direction Z allows this part of the wasted space to be better utilized, so that part of the distance for increasing energy density is offset by the space size occupied by the first top sealing portion 12 in the third direction Z, thereby further reducing the head space occupation of the secondary battery, and further increasing the capacity of the secondary battery.

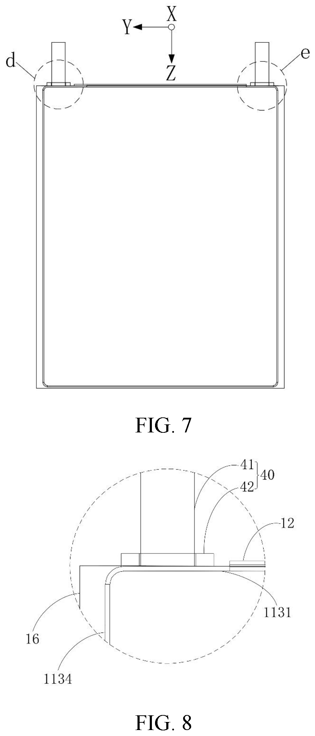

Refer to FIG. 4 or FIG. 8 together with FIG. 10. Similarly, to alleviate the short circuit caused by the contact between the second metal strip 41 and an exposed metal layer on the packaging bag 10 that surrounds an outer peripheral surface thereof, in some embodiments, in the third direction Z, an end of the second tab adhesive 42 exceeds a side edge of the packaging bag 10 where the second tab adhesive 42 is sealed.

Further, when viewed in the second direction Y, a projection of a portion of the second tab adhesive 42 in the third direction Z exceeding the packaging bag 10 overlaps with a projection of the second top sealing portion 17. With such arrangement, in a distance by which the second tab adhesive 42 exceeds the side edge of the packaging bag 10 where the second tab adhesive 42 is sealed, part of the distance is offset by the space size occupied by the first top sealing portion 12 in the third direction Z, thereby further reducing the head space occupation of the secondary battery, and further increasing the capacity of the secondary battery.

FIG. 6 is a locally enlarged view at position c in the secondary battery shown in FIG. 5.

Refer to FIG. 5 and FIG. 6 together. In some embodiments, the electrode assembly 20 includes a first electrode plate 21, a second electrode plate 22 with a polarity different from that of the first electrode plate 21, and a separator 23 that separates the first electrode plate 21 from the second electrode plate 22. One of the first electrode plate 21 and the second electrode plate 22 is electrically connected to the first tab 30, and the other is electrically connected to the second tab 40.

For ease of description, in the following embodiments, the first electrode plate 21 being a positive electrode plate and the second electrode plate 22 being a negative electrode plate is used as an example for description.

The first electrode plate 21 includes a first current collector (not shown in the figure) and a first active substance layer (not shown in the figure) applied on at least one surface of the first current collector. The first current collector is electrically connected to one end, in the accommodating chamber, of the first tab 30.

It can be understood that the electrical connection method between the first tab 30 and the first current collector is not specifically limited in some embodiments of this application. For example, in some embodiments, the first tab 30 and the first current collector are different parts on the same component. During specific implementation, the first tab 30 and the first current collector adapted to the shape of the body portion 11 may be die-cut on a complete metal foil, and then the first active substance layer is applied on at least one surface of the first current collector to form the first electrode plate 21. For another example, in some other embodiments, the first tab 30 and the first current collector are independent components. During specific implementation, a groove exposing a surface of the first current collector may be scraped on the first current collector coated with the first active substance layer, and then the first tab 30 is fixed to the surface of the first current collector in the groove by but not limited to laser welding.

The first current collector includes but is not limited to one or more of aluminum mesh, aluminum foil, copper foil, and other conductive metal sheets. In an example, the first current collector is made of aluminum foil.

The first active substance layer includes but is not limited to one or more of lithium cobalt oxide, lithium nickel cobalt manganate, lithium nickel cobalt aluminate, lithium manganate, lithium nickel oxide, lithium manganese iron phosphate, lithium vanadium phosphate, lithium iron phosphate, and lithium-rich manganese-based materials.

The second electrode plate 22 includes a second current collector and a second active substance layer (not shown in the figure) applied on at least one surface of the second current collector (not shown in the figure). The second current collector is electrically connected to one end, extending into the accommodating chamber, of the second tab 40.

The second current collector includes but is not limited to one or two of copper foil, nickel foil, and other conductive metal sheets. In an example, the second current collector is made of copper foil.

The second active substance layer includes but is not limited to one or more of artificial graphite, natural graphite, soft carbon, hard carbon, graphene, a meso-carbon microbead, a silicon-based material, a tin-based material, lithium carbonate, or another metal that can form an alloy with lithium.

It can be understood that the electrical connection method between the second tab 40 and the second current collector is not specifically limited in some embodiments of this application. The connection method used between the second tab 40 and the second current collector is similar to the connection method used between the first tab 30 and the first current collector. Reference can be made to the description of the connection method that can be used between the first tab 30 and the first current collector. Details are not repeated herein.

As shown in FIG. 5 and FIG. 6, in some embodiments, the electrode assembly 20 may be a laminated structure. Specifically, at least two first electrode plates 21 are provided, and at least two second electrode plates 22 are also provided, where the at least two first electrode plates 21 and at least two second electrode plates 22 are alternately stacked in the first direction X, and the separator 23 separates the first electrode plates 21 from the second electrode plate 22.

In some embodiments, in the third direction Z, a junction of the electrical connection between the plurality of first electrode plates 21 and the first tab 30 is opposite the first gap 14.

In some embodiments, in the third direction Z, a junction of the electrical connection between the plurality of second electrode plates 22 and the second tab 40 is opposite the second gap 15.

Alternatively, the electrode assembly 20 may be a wound structure. Specifically, one first electrode plate 21 and one second electrode plate 22 are provided, and both the first electrode plate 21 and the second electrode plate 22 are strip-shaped structures. The first electrode plate 21, the separator 23, and the second electrode plate 22 are sequentially stacked and wound for more than two turns.

Certainly, the electrode assembly 20 may alternatively be other components than the laminated structure or the wound structure, provided that it can realize the charging and discharging function of the secondary battery.

### Second embodiment

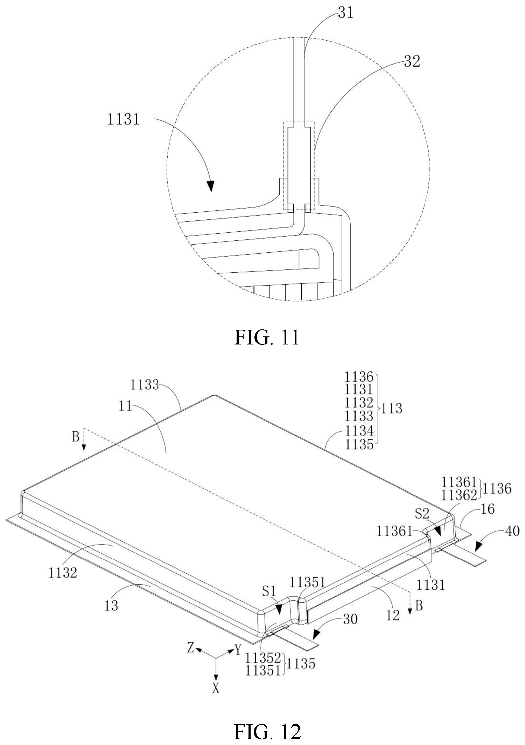

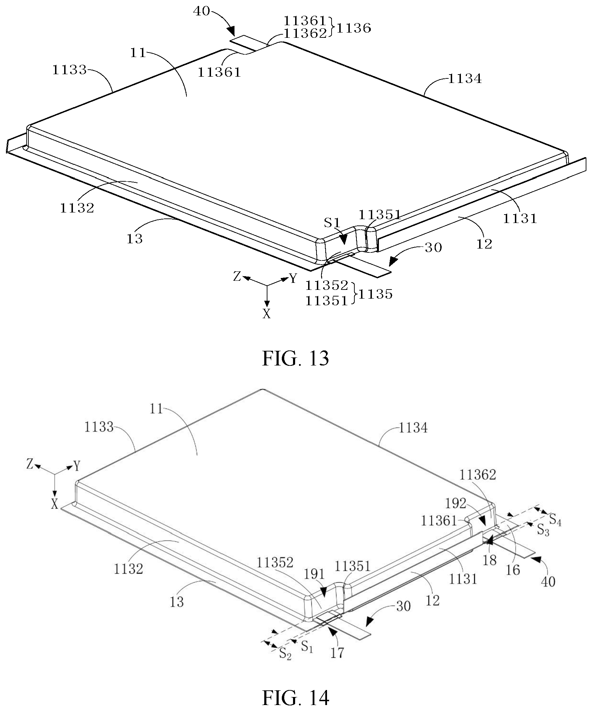

For ease of description, this application uses a same reference sign to identify components with a same name. Based on the description of the foregoing first embodiment, with the difference lies in that as shown in FIG. 12 or FIG. 13, in some embodiments, the packaging bag 10 has a first space S1, and the first space S1 communicates with the first gap (not shown).

Specifically, the body portion 11 includes a second top wall 1135, and the second top wall 1135 includes a first connecting wall 11351 and a second connecting wall 11352. Both the second connecting wall 11352 and the first top wall 1131 are located on the same side of the body portion 11. The second connecting wall 11352 is connected to the first top wall 1131 through the first connecting wall 11351 and is recessed relative to the first top wall 1131 in a direction opposite the third direction Z. The first connecting wall 11351 and the second connecting wall 11352 enclose the foregoing first space S1 communicating with the first gap 14. It should be noted herein that as long as there is a non-coplanar region in the component of the second top wall 1135 in the third direction Z, it can be determined that the second top wall 1135 is recessed toward the third direction Z relative to the first top wall 1131. A junction between the first tab 30 and the electrode assembly 20 can be made closer to the center of the packaging bag 10, which can reduce the space occupied by the adapting of the first tab 30.

The first tab adhesive 32 is disposed on the second connecting wall 11352 and one end of the first tab adhesive 32 in the third direction Z exceeds the second connecting wall 11352 and extends into the first space S1.

In the third direction Z, another end of the first metal strip 31 sequentially passes through the accommodating chamber, the first tab adhesive 32, the first space S1, and the first gap and extends out of the packaging bag 10.

In the secondary battery involved in this application, a distance by which the first tab adhesive 32 exceeds the second connecting wall 11352 can be accommodated in the first space S1, or the distance by which the first tab adhesive 32 exceeds the second connecting wall 11352 can be accommodated in the space jointly enclosed by the first space S1 and the first top sealing portion 12, thereby further reducing the head space occupation of the secondary battery, and further increasing the capacity of the secondary battery.

In some embodiments, both the second connecting wall 11352 and the first top wall 1131 are parallel to the first direction X, which can facilitate the subsequent sealing of the packaging bag 10 and the first tab 30.

In some embodiments, a rounded corner is provided at a junction between the first top wall 1131 and the first connecting wall 11351 to make the first top wall 1131 and the first connecting wall 11351 transition smoothly.

In some embodiments, a rounded corner is provided at a junction between the first connecting wall 11351 and the second connecting wall 11352 to make the first connecting wall 11351 and the second connecting wall 11352 transition smoothly.

In some embodiments, a rounded corner is provided at a junction between the second connecting wall 11352 and the first side wall 1132 to make the second connecting wall 11352 and the first side wall 1132 transition smoothly.

It can be understood that the specific shape of the first space S1 is not limited in some embodiments of this application. For example, as shown in FIG. 12 or FIG. 13, in some embodiments, when viewed in the first direction X, a shape of a cross section of the first space S1 is generally approximately rectangular. For another example, in some other embodiments, when viewed in the first direction X, the second top wall 1135 is generally inclined, with one end connected to the first top wall 1131 and another end connected to the first side wall 1132. In this case, the first space S1 jointly enclosed by the first top wall 1131, the second top wall 1135, and the first side wall 1132 may be triangular or of another shape.

Still as shown in FIG. 12, in some embodiments, the packaging bag 10 has a second space S2, and the second space S2 communicates with the second gap (not shown). Specifically, the third top wall 1136 includes a third connecting wall 11361 and a fourth connecting wall 11362. Both the fourth connecting wall 11362 and the first top wall 1131 are located on the same side of the body portion 11. The fourth connecting wall 11362 is connected to the first top wall 1131 through the third connecting wall 11361 and is recessed relative to the first top wall 1131 toward the third direction Z. The third connecting wall 11361 and the fourth connecting wall 11362 enclose the foregoing second space S2 communicating with the second gap. It should be noted herein that as long as there is a non-coplanar region in the component of the third top wall 1136 in the third direction Z, it can be determined that the second top wall 1136 is recessed toward the third direction Z relative to the first top wall 1131. A junction between the second tab 42 and the electrode assembly 20 can be made closer to the center of the packaging bag 10, which can reduce the space occupied by the adapting of the second tab 42.

The second tab adhesive 42 is disposed on the fourth connecting wall 11362 and one end of the second tab adhesive 42 in the third direction Z exceeds the fourth connecting wall 11362 and extends into the second space S2.

In the third direction Z, another end of the second metal strip 41 sequentially passes through the second tab adhesive 42, the second space S2, and the second gap 15 and extends out of the packaging bag 10.

The advantage of adopting this technical solution is that a distance by which the second tab adhesive 42 exceeds the fourth connecting wall 11362 can be accommodated in the second space S2, or the distance by which the second tab adhesive 42 exceeds the fourth connecting wall 11362 can be accommodated in the space jointly enclosed by the second space S2 and the first top sealing portion 12. The space sizes occupied in the third direction Z jointly offset each other, thereby further reducing the head space occupation of the secondary battery, and further increasing the capacity of the secondary battery.

In some embodiments, both the fourth connecting wall 11362 and the first top wall 1131 are parallel to the first direction X, which can facilitate the subsequent sealing of the bag body and the second tab.

In some embodiments, a rounded corner is provided at a junction between the first top wall 1131 and the third connecting wall 11361 to make the first top wall 1131 and the third connecting wall 11361 transition smoothly.

In some embodiments, a rounded corner is provided at a junction between the third connecting wall 11361 and the fourth connecting wall 11362 to make the third connecting wall 11361 and the fourth connecting wall 11362 transition smoothly.

In some embodiments, a rounded corner is provided at a junction between the fourth connecting wall 11362 and the second side wall 1134 to make the fourth connecting wall 11362 and the second side wall 1134 transition smoothly.

It can be understood that the specific shape of the second space S2 is not limited in some embodiments of this application. For example, as shown in FIG. 12, in some embodiments, when viewed in the first direction X, a shape of a cross section of the second space S2 is generally approximately rectangular. For another example, in some other embodiments, when viewed in the first direction X, the third top wall 1136 is generally inclined, with one end connected to the first top wall 1131 and another end connected to the second side wall 1134. In this case, the second space S2 jointly enclosed by the first top wall 1131, the third top wall 1136, and the second side wall 1134 may be triangular or of other shapes.

### Third embodiment

For ease of description, this application uses a same reference sign to identify components with a same name. Based on the description of the foregoing first embodiment, with the difference lies in the following.

As shown in FIG. 14, FIG. 15, or FIG. 20, in some embodiments, the packaging bag 10 has a first groove 191, and the first groove 191 communicates with the first gap (not shown).

Specifically, the second top wall 1135 includes a first connecting wall 11351 and a second connecting wall 11352. Both the second connecting wall 11352 and the first top wall 1131 are located on the same side of the body portion 11. The second connecting wall 11352 is connected to the first top wall 1131 through the first connecting wall 11351 and is recessed relative to the first top wall 1131 toward the third direction Z.

The packaging bag 10 includes a second top sealing portion 17. The second top sealing portion 17 is connected to the second connecting wall 11352 and extends outward. The second top sealing portion 17 is connected to the first top sealing portion 12 and the first side sealing portion 13 separately. The first connecting wall 1135, the second top sealing portion 17, and the second connecting wall 11352 jointly enclose the foregoing first groove 191.

The first tab adhesive 32 is disposed on the second top sealing portion 17 and one end of the first tab adhesive 32 in the third direction Z exceeds one side edge of the second top sealing portion 17 and extends to the first gap.

In the third direction Z, another end of the first metal strip 31 sequentially passes through the accommodating chamber, the first tab adhesive 32, and the first gap and extends out of the packaging bag 10.

In the secondary battery involved in this application, the presence of the second top sealing portion 17 allows for larger contact area to be provided between the first tab adhesive 32 and the packaging bag 10, so that stable connection reliability can be maintained between the first tab adhesive 32 and the second sealing portion, which can alleviate the occurrence of liquid leakage between the first metal strip 31 and the second top sealing portion 17. The first groove 191 is located at one corner of the body portion 11, which can facilitate the fixing and positioning of the first tab 30 by a hot-pressing fixture, so as to improve the assembly efficiency of the secondary battery.

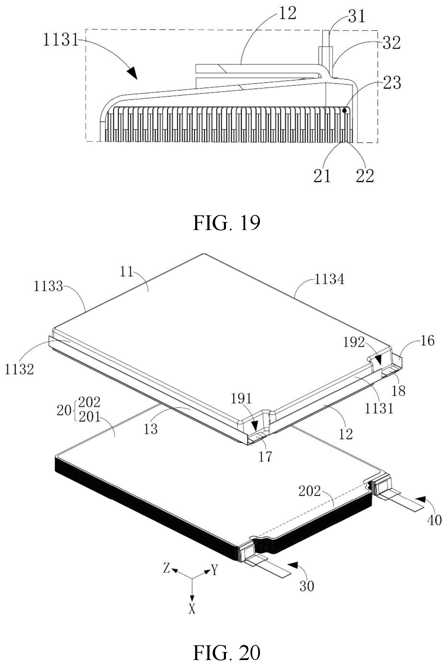

It can be understood that the specific shape of the first groove 191 is not limited in some embodiments of this application. For example, as shown in FIG. 14 to FIG. 16 or in FIG. 20, in some embodiments, when viewed in the first direction X, a shape of a cross section of the first groove 191 is generally approximately rectangular. For another example, in some other embodiments, the second top wall 1135 is inclined and is connected to the first top wall 1131 and the first side wall 1132 separately. The second top wall 1135, the second top sealing portion 17, and the first side wall 1132 jointly enclose the first groove 191. In this case, the first groove 191 may be a trapezoidal groove or of other shapes.

In some embodiments, both the second connecting wall 11352 and the first top wall 1131 are parallel to the first direction X, which can facilitate the subsequent sealing of the bag body and the first tab.

As shown in FIG. 14, in some embodiments, a distance between the second connecting wall 11351 in the third direction Z and the folded first top sealing portion 12 is S₁, a sum of a distance by which the second top sealing portion 17 extends out of the second connecting wall 11351 and a distance by which the first tab adhesive 32 exceeds the second top sealing portion 17 is S₂, and S₁ and S₂ satisfy S₁ ≥ S₂. In this case, under the premise of little impact on the volumetric energy density of the secondary battery, the first tab adhesive 32 does not need to be bent, thereby alleviating the occurrence of liquid leakage due to insufficient connection strength around the first tab adhesive 32 caused by bending of the first tab adhesive 32.

As shown in FIG. 14 to FIG.16 or in FIG. 20, in some embodiments, one side edge of the second top sealing portion 17 farther away from the second connecting wall 1136 is flush with one side edge of the first side sealing portion 13 in the third direction Z, which can reduce the processing procedures of the packaging bag 10 and improve the production efficiency of the secondary battery. It should be noted that being flush herein does not refer to strict flushness. Due to process tolerances, any deviation within 0.5 mm should be considered as being flush.

As shown in FIG. 14, FIG. 15, FIG. 17, or FIG. 20, in some embodiments, the packaging bag 10 has a second groove 192, and the second groove 192 communicates with the second gap (not shown).

Specifically, the third top wall 1136 includes a third connecting wall 11361 and a fourth connecting wall 11362. Both the fourth connecting wall 11362 and the first top wall 1131 are located on the same side of the body portion 11. The fourth connecting wall 11362 is connected to the first top wall 1131 through the third connecting wall 11361 and is recessed relative to the first top wall 1131 in a direction opposite the third direction Z.

The packaging bag 10 includes a third top sealing portion 18. The third top sealing portion 18 is connected to the fourth connecting wall 11362 and extends out of the accommodating chamber. The third top sealing portion 18 is connected to the first top sealing portion 12 and the second side sealing portion 16 separately. The third connecting wall 11361, the third top sealing portion 18, and the fourth connecting wall 11362 jointly enclose the foregoing second groove 192.

The second tab adhesive 42 is disposed on the third top sealing portion 18, and one end of the second tab adhesive 42 in the third direction Z exceeds one side edge of the third top sealing portion 18 and extends to the second gap 15.

In the third direction Z, another end of the second metal strip 41 sequentially passes through the accommodating chamber, the second tab adhesive 42, and the second gap 15 and extends out of the packaging bag 10.

In the secondary battery involved in this application, the presence of the third top sealing portion 18 allows for larger contact area to be provided between the second tab adhesive 42 and the packaging bag 10, so that stable connection reliability can be maintained between the second tab adhesive 42 and the third top sealing portion 18, which can alleviate the occurrence of liquid leakage between the second metal strip 41 and the third top sealing portion 18. The second groove 192 is located at another corner of the body portion 11, which can facilitate the fixing and positioning of the second tab 40 by a hot-pressing fixture, so as to improve the assembly efficiency of the secondary battery.

It can be understood that the specific shape of the second groove 192 is not limited in some embodiments of this application. For example, as shown in FIG. 11, FIG. 12, or FIG. 14, in some embodiments, when viewed in the first direction X, a shape of a cross section of the second groove 192 is generally approximately rectangular. For another example, in some other embodiments, the third top wall 1135 is connected to the first top wall 1131 and the second side wall 1134 separately. The third top wall 1135, the third top sealing portion 18, and the second side wall 1134 jointly enclose the second groove 192. In this case, the first groove 192 may be a trapezoidal groove or of other shapes.

In some embodiments, both the fourth connecting wall 11362 and the first top wall 1131 are parallel to the first direction X, which can facilitate the subsequent sealing of the bag body and the second tab.

As shown in FIG. 14, in some embodiments, a distance between the fourth connecting wall 11362 in the third direction Z and the folded first top sealing portion 12 is S₃, a sum of a distance by which the third top sealing portion 18 extends out of the fourth connecting wall 11362 and a distance of a portion of the second tab adhesive 42 exceeding one side edge of the third top sealing portion 18 in the third direction Z is S₄, and S₃ and S₄ satisfy S₃ ≥ S₄. In this case, under the premise of little impact on the volumetric energy density of the secondary battery, the second tab adhesive 42 does not need to be bent, thereby alleviating the occurrence of liquid leakage due to insufficient connection strength around the second tab adhesive 42 caused by bending of the second tab adhesive 42.

As shown in FIG. 14 or FIG. 20, in some embodiments, one side edge of the third top sealing portion 18 farther away from the fourth connecting wall 11362 is flush with one side edge of the second side sealing portion 16 in the third direction Z. Being flush does not refer to strict flushness. Due to process tolerances, any deviation within 0.5 mm should be considered as being flush. This can reduce the processing procedures of the packaging bag 10 and improve the production efficiency of the secondary battery.

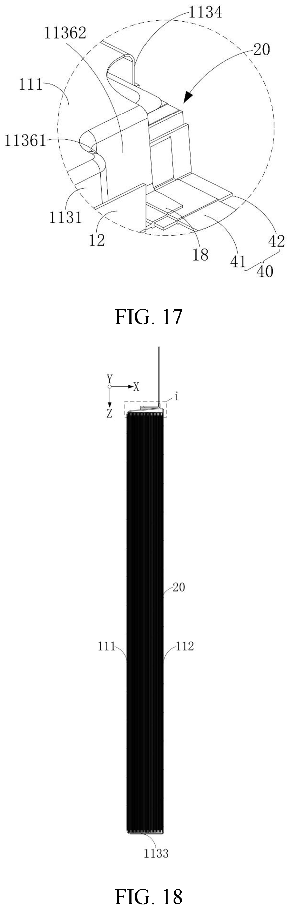

Refer to FIG. 18 to FIG. 20 together. In some embodiments, the accommodating chamber includes a first chamber (not shown in the figure) and a second chamber (not shown in the figure) communicating with the first chamber. The first chamber may be jointly enclosed by the second connecting wall 11352, the first side wall 1132, the bottom wall 1133, the second side wall 1134, the fourth connecting wall 11362, and a virtual connecting line between the fourth connecting wall 11362 and the second connecting wall 11352. The second chamber may be jointly enclosed by the first top wall 1131, the first connecting wall 1135, the virtual connecting line between the fourth connecting wall 11362 and the second connecting wall 11352, and the third connecting wall 11361.

The electrode assembly 20 includes an electrode assembly body 201 and a protrusion 202 integrally connected to the electrode assembly body 201. The electrode assembly 20 is accommodated in the first chamber, and the protrusion 202 is accommodated in the second chamber. Specifically, any first electrode plate 21 includes a first electrode plate body (not shown) and a first protruding portion (not shown) integrally connected to the first electrode plate body. Any second electrode plate 22 includes a second electrode plate body (not shown) and a second protruding portion (not shown) integrally connected to the second electrode plate body. Any separator 23 includes a separator body (not shown) and a third protruding portion (not shown) integrally connected to the separator body. The electrode assembly body 201 can be formed by alternately stacking at least two first electrode plate bodies, at least two separator bodies, and at least two second electrode plate bodies in sequence in the first direction X. The protrusion 202 can be formed by alternately stacking at least the first protruding portion, at least the third protruding portion, and at least two second protruding portions in sequence in the first direction X.

It should be noted herein that the difference between the first electrode plate body and the first protruding portion lies in their positions, and the rest of the structures are substantially the same, that is, both the first electrode plate body and the first protruding portion include a first current collector and a first active substance layer. The difference between the second electrode plate body and the second protruding portion also lies in their positions, and the rest of the structures are substantially the same, that is, both the second electrode plate body and the second protruding portion include a second current collector and a second active substance layer. The difference between the separator body and the third protruding portion lies in their positions, and the rest of the structures are substantially the same.

In the first chamber, the electrode assembly body 201 is electrically connected to one end of the first tab 30 and one end of the second tab 40 respectively. Specifically, a plurality of first electrode plate bodies are electrically connected to one end of the first tab 30, and a plurality of second electrode plate bodies are electrically connected to one end of the second tab 40.

As shown in FIG. 12, in some embodiments, in the third direction Z, a junction of the electrical connection between the plurality of first electrode plate bodies and the first tab 30 is opposite the second connecting wall 11352. In other words, the junction of the electrical connection between the plurality of first electrode plate bodies and the first tab 30 may no longer be disposed in a partial region of the second chamber opposite the first top sealing portion 12. On one hand, a gap between the protrusion 202 and the first top sealing portion 12 is shortened, which can reduce the accumulation of free electrolyte in this partial region, thereby alleviating the occurrence of separator contraction and short circuit caused by the separator 23 at the protrusion 202 being impacted by excessive accumulation of free electrolyte. On the other hand, the first top sealing portion 12 is no longer affected by the first metal strip 31 and the first tab adhesive 32 during heat sealing, and the first top sealing portion 12 has stable connection strength after heat sealing. On still the other hand, a size of the first top sealing portion 12 extending outward is also reduced because it is not affected by the first metal strip 31 and the first tab adhesive 32, thereby further increasing the volumetric energy density of the secondary battery.

Still as shown in FIG. 17, in some embodiments, in the third direction Z, a junction of the electrical connection between the plurality of second electrode plate bodies and the second tab 40 is opposite the fourth connecting wall 11362. Based on a mechanism similar to that described in the junction of electrical connection between the first electrode plate body and the first tab 30, similar effects to those in the foregoing embodiments can also be achieved. Details are not repeated herein. In addition, when the first tab 30 and the second tab 40 are respectively located on opposite sides of the first top sealing portion 12 in the second direction Y, even if the presence of the first space S1 and the second space S2 reduces the capacity of the secondary battery, as compared with a battery with top folded for sealing of the same size, the capacity increased by the protrusion 202 is still greater than a sum of the capacity reduced by the above two, that is, the total capacity of the secondary battery can still be increased. It should be noted that the plurality mentioned herein specifically refers to two or more than two.

As shown in FIG. 19, in some embodiments, in the third direction, a plurality of third protruding portions exceed an end of the second protruding portion and are connected and fixed to each other to form a connecting portion (not shown in the figure), which can be fixed by hot pressing. With such arrangement, the overall structure formed by connecting and fixing a plurality of third protruding portions can increase an upper limit of the maximum impact stress resistance, thereby alleviating the occurrence of separator folding and short circuit when the separator 23 at the protrusion 202 is impacted by free electrolyte.

In a traditional battery cell, since both positive and negative tabs extend from the middle of an electrode assembly, a connecting portion cannot be made longer in a second direction Y due to the interference of the tabs, resulting in high failure rate of the connecting portion and the occurrence of separator contraction. The inventors of this application have demonstrated through experiments that limiting a length of the connecting portion in the second direction Y to 15 mm to 120 mm enables secondary batteries of this type to have more desirable failure rates in drop tests.

Further, the length of the connecting portion in the second direction is 20 mm to 120 mm, thereby further increasing the connection strength of the connecting portion.

As shown in FIG. 12 to FIG.15, in some embodiments, one side edge of the first top sealing portion 12 in the second direction Y exceeds the first top wall 1131. In this way, the first top sealing portion 12 can maintain a sufficient safety distance at a position of the connection to the first connecting wall 1135, so that the first top sealing portion 12 can maintain reliable sealing at the position of the connection to the first connecting wall 1135, thus reducing damage and liquid leakage at that position.

Similarly, another side edge of the first top sealing portion 12 in the second direction Y exceeds the first top wall 1131.

Another embodiment of this application further provides an electrical device, including any one of the foregoing secondary batteries. The electrical device of this application may be but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a lighting appliance, a toy, a game console, a clock, an electric tool, a flash lamp, a camera, a large household battery, or a lithium-ion capacitor.

The foregoing descriptions are merely some embodiments of this application and are not intended to limit the patent scope of this application. Any equivalent structural or procedural transformations made by using the content of the specification and the accompanying drawings of this application or any direct or indirect application in other related technical fields are included in the patent protection scope of this application in the same way.

## Claims

1. A secondary battery, comprising a packaging bag, an electrode assembly, and a first tab, wherein the packaging bag comprises a body portion, a first top sealing portion, and a first side sealing portion, the electrode assembly is disposed in the body portion, the body portion comprises a first top wall and a first side wall, the first top sealing portion is connected to the first top wall and bent toward a first direction, the first side wall is located on one side of the first top wall in a second direction, and the first side sealing portion is connected to the first side wall, the first direction being perpendicular to the second direction; wherein
in the second direction, a first gap is formed between the first side sealing portion and the first top sealing portion; and
the first tab comprises a first metal strip and a first tab adhesive surrounding the first metal strip, one end of the first metal strip is electrically connected to the electrode assembly, the first tab adhesive is adhered to the packaging bag, and another end of the first tab passes through the first tab adhesive and the first gap and extends out of the packaging bag.

2. The secondary battery according to claim 1, wherein the body portion comprises a second top wall, the second top wall is connected to the first top wall and the first side wall separately, and the second top wall is recessed toward a third direction relative to the first top wall, the third direction, the second direction, and the first direction being perpendicular to each other;
the packaging bag comprises a second top sealing portion, the second top sealing portion is disposed on the second top wall, and the second top sealing portion connects the first top sealing portion and the first side sealing portion; and
another end of the first metal strip passes through the second top sealing portion and the first gap and extends out of the packaging bag.

3. The secondary battery according to claim 2, wherein the second top wall comprises a first connecting wall and a second connecting wall, and the second connecting wall is connected to the first top wall through the first connecting wall; and
both the second connecting wall and the first top wall are parallel to the first direction.

4. The secondary battery according to claim 3, wherein the first tab adhesive is disposed on the second top sealing portion, and in the third direction, an end of the first tab adhesive exceeds a side edge of the second top sealing portion; and
when viewed in the second direction, a projection of a portion of the first tab adhesive exceeding the side edge of the second top sealing portion overlaps with a projection of the first top sealing portion.

5. The secondary battery according to claim 4, wherein a distance between the second connecting wall in the third direction and a surface of the first top sealing portion facing away from the first top wall is S₁, in the third direction, a sum of a distance between an end closer to the second connecting wall and an end farther away from the second connecting wall of the second top sealing portion and a distance of the portion of the first tab adhesive exceeding the side edge of the second top sealing portion is S₂, and S₁ and S₂ satisfy S₁ ≥ S₂.

6. The secondary battery according to any one of claims 2 to 5, wherein the packaging bag comprises a second side sealing portion, the body portion comprises a second side wall, the second side wall is located on another side of the first top wall in the second direction, and the second side sealing portion is connected to the second side wall;
in the first direction, a second gap is formed between the second side sealing portion and the first top sealing portion; and
the secondary battery comprises a second tab, the second tab comprises a second metal strip and a second tab adhesive surrounding and covering the second metal strip, one end of the first metal strip is electrically connected to the electrode assembly, and another end of the second tab passes through the second tab adhesive and the second gap and extends out of the packaging bag.

7. The secondary battery according to claim 6, wherein the body portion comprises a third top wall, the third top wall is connected to the first top wall and the second side wall separately, and the third top wall is recessed toward the third direction relative to the first top wall, the third direction, the second direction, and the first direction being perpendicular to each other;
the packaging bag comprises a third top sealing portion, the third top sealing portion is disposed on the third top wall, and the third top sealing portion connects the first top sealing portion and the second side sealing portion; and
another end of the second metal strip passes through the third top sealing portion and the second gap and extends out of the packaging bag.

8. The secondary battery according to claim 7, wherein the third top wall comprises a third connecting wall and a fourth connecting wall, and the fourth connecting wall is connected to the first top wall through the third connecting wall; and
both the fourth connecting wall and the first top wall are parallel to the first direction.

9. The secondary battery according to claim 8, wherein the second tab adhesive is disposed on the third top sealing portion, and in the third direction, an end of the second tab adhesive exceeds a side edge of the third top sealing portion; and
when viewed in the second direction, a projection of a portion of the second tab adhesive exceeding the side edge of the third top sealing portion overlaps with a projection of the first top sealing portion.

10. The secondary battery according to claim 9, wherein the packaging bag has a first chamber and a second chamber communicating with the first chamber;
the electrode assembly comprises an electrode assembly body and a protrusion integrally connected to the electrode assembly body, the electrode assembly body is accommodated in the first chamber, and the protrusion is accommodated in the second chamber;
one end of the first metal strip and one end of the second metal strip are both electrically connected to the electrode assembly body;
the electrode assembly comprises a first electrode plate, a second electrode plate, and a separator separating the first electrode plate from the second electrode plate;
the first electrode plate comprises a first electrode plate body and a first protruding portion integrally connected to the first electrode plate body;
the second electrode plate comprises a second electrode plate body and a second protruding portion integrally connected to the second electrode plate body; and
the separator comprises a separator body and a third protruding portion integrally connected to the separator body; wherein
the electrode assembly body is formed by alternately stacking the first electrode plate body, the separator body, and the second electrode plate body in sequence, and the protrusion is formed by alternately stacking the first protruding portion, the third protruding portion, and the second protruding portion in sequence.

11. The secondary battery according to claim 10, wherein in the third direction, a junction between the electrode assembly body and the first metal strip is opposite the second top wall; and/or
in the third direction, a junction between the electrode assembly body and the second metal strip is opposite the third top wall.

12. The secondary battery according to claim 10, wherein at least two third protruding portions are provided, and in
in the third direction, the at least two third protruding portions exceed an end of the second protruding portion and are connected and fixed to each other to form a connecting portion.

13. The secondary battery according to claim 12, wherein a length of the connecting portion in the second direction is 15 mm to 120 mm.

14. The secondary battery according to any one of claims 9 to 13, wherein the second side sealing portion is bent toward the first direction; and/or
the first side sealing portion is bent toward the first direction.

15. An electrical device, comprising the secondary battery according to any one of claims 1 to 14.
